# EUROPEAN PATENT APPLICATION

(11) **EP 4 398 334 A1**
(43) Date of publication of application: **10.07.2024**
(21) Application number: 21955283.3
(22) Date of filing: 02.09.2021
(51) Int. Cl.: H01M 4/136, H01M 4/36, H01M 4/58, H01M 10/0562

(54) **POSITIVE ELECTRODE MATERIAL FOR ELECTRICAL DEVICE, AND POSITIVE ELECTRODE FOR ELECTRICAL DEVICE AND ELECTRICAL DEVICE USING SAME**

(71) Applicant: NISSAN MOTOR CO., LTD., Kanagawa 221-0023 (JP); Renault s.a.s, 92100 Boulogne Billancourt (FR)
(72) Inventor: FUJIMOTO, Misaki, Atsugi-shi, Kanagawa 243-0123 (JP); ITO, Atsushi, Atsugi-shi, Kanagawa 243-0123 (JP); ONO, Masaki, Atsugi-shi, Kanagawa 243-0123 (JP); OGIHARA, Wataru, Atsugi-shi, Kanagawa 243-0123 (JP); MOROOKA, Masahiro, Atsugi-shi, Kanagawa 243-0123 (JP)
(74) Representative: Grünecker Patent- und Rechtsanwälte PartG mbB
(86) International application number: PCT/IB2021/000603
(87) International publication number: WO 2023/031639

(57) **Abstract**

To provide a means for improving cycle durability of an electric device which uses a positive electrode active material containing sulfur. Provided is a positive electrode material for an electric device including, in the pores of a porous conductive material, a positive electrode active material containing sulfur and an electronic conductor.

## Description

### TECHNICAL FIELD

The present invention relates to a positive electrode material for an electric device, and a positive electrode for an electric device and an electric device using the same.

### BACKGROUND ART

In recent years, in order to fight global warming, there is a strong need for reduction of the amount of carbon dioxide. In the automobile industry, there are increasing expectations for a reduction of carbon dioxide emissions by introduction of electric vehicles (EV) and hybrid electric vehicles (HEV), and development of non-aqueous electrolyte secondary batteries such as secondary batteries for motor driving, which are key to practical application of such vehicles, has been actively conducted.

A secondary battery for motor driving is required to have extremely high output characteristics and high energy as compared with a lithium secondary battery for consumer use used in a mobile phone, a notebook computer, and the like. Therefore, a lithium secondary battery having the highest theoretical energy among all practical batteries has attracted attention, and is currently being rapidly developed.

Here, lithium secondary batteries that are currently widespread use a combustible organic electrolyte solution as an electrolyte. In such liquid-based lithium secondary batteries, safety measures against liquid leakage, short circuit, overcharge, and the like are more strictly required than other batteries.

Therefore, in recent years, research and development on an all solid lithium secondary battery using an oxide-based or sulfide-based solid electrolyte as an electrolyte have been actively conducted. The solid electrolyte is a material mainly made of an ion conductor that enables ion conduction in a solid. For this reason, in an all solid lithium secondary battery, in principle, various problems caused by combustible organic electrolyte solution do not occur unlike the conventional liquid-based lithium secondary battery. In general, use of a high-potential and large-capacity positive electrode material and a large-capacity negative electrode material can achieve significant improvement in output density and energy density of a battery. For example, elemental sulfur (S₈) has an extremely large theoretical capacity of about 1670 mAh/g, and has the advantage of being abundant in resources at low cost.

On the other hand, due to low electron conductivity of sulfur and the like, the characteristic that a positive electrode active material containing sulfur has a high capacity cannot be sufficiently utilized at present.

For the purpose of sufficiently utilizing high capacity characteristics of a positive electrode active material such as sulfur simple substance, JP 2014-17241 A, for example, discloses a method for producing a thin-film sulfur-coated conductive carbon including immersing a conductive carbon having a predetermined specific surface area in a sulfur solution and then separating the conductive carbon from the sulfur solution. According to the literature, the obtained thin-film sulfur-coated conductive carbon tends to diffuse electrons and lithium ions inside sulfur, and thus can be used as a positive electrode mixture to provide an all-solid-state lithium sulfur battery having excellent discharge capacity and rate characteristics.

### SUMMARY OF INVENTION

### Technical Problem

However, according to the study of the present inventors, it has been found that when the technique described in JP 2014-17241 A is adopted as a positive electrode material for an electric device, the cycle durability of the electric device to which the positive electrode material is applied cannot be sufficiently ensured.

Therefore, a purpose of the present invention is to provide a means for improving cycle durability of an electric device which used a positive electrode active material containing sulfur.

### Solution to Problem

The present inventors have carried out a diligent study to solve the above problem. As a result, the present inventors have found that the above problem can be solved by filling pores of a porous conductive material with an electronic conductor together with a positive electrode active material containing sulfur, and have completed the present invention.

An embodiment of the present invention is a positive electrode material for an electric device including, in pores of a porous conductive material, a positive electrode active material containing sulfur and an electronic conductor.

### BRIEF DESCRIPTION OF DRAWINGS

Fig. 1 is a perspective view illustrating an appearance of a flat laminate type all solid lithium secondary battery as an embodiment according to the present invention.
Fig. 2 is a cross-sectional view taken along line 2-2 illustrated in Fig. 1.
Fig. 3 is a schematic cross-sectional view of a positive electrode material in the prior art.
Fig. 4 is a schematic cross-sectional view of a positive electrode material according to an embodiment according to the present invention.

### DESCRIPTION OF EMBODIMENTS

An embodiment of the present invention is a positive electrode material for an electric device including, in pores of a porous conductive material, a positive electrode active material containing sulfur and an electronic conductor. With the positive electrode material for an electric device according to the present embodiment, it is possible to improve cycle durability of an electric device that uses a positive electrode active material containing sulfur.

Hereinafter, the embodiments according to the present embodiment described above will be described with reference to the drawings, but the technical scope of the present invention should be determined based on the description of the claims, and is not limited to the following embodiments. The dimensional ratios of the drawings are exaggerated for convenience of description and may differ from the actual ratios. In the present specification, "X to Y" indicating a range means "X or more and Y or less". In addition, unless otherwise specified, operation and measurement of physical properties and the like are performed under the conditions of room temperature (20 to 25°C) and relative humidity of 40 to 50%RH.

In the following description, the present invention will be described using a laminate type (internally parallel connection type) all solid lithium secondary battery, which is an embodiment of an electric device, as an example. As described above, the solid electrolyte constituting the all solid lithium secondary battery is a material mainly made of an ion conductor that enables ion conduction in a solid. For this reason, in an all solid lithium secondary battery, there is an advantage that, in principle, various problems caused by combustible organic electrolyte solution do not occur unlike the conventional liquid-based lithium secondary battery. In general, there is also an advantage that use of a high-potential and large-capacity positive electrode material and a large-capacity negative electrode material can achieve significant improvement in output density and energy density of a battery.

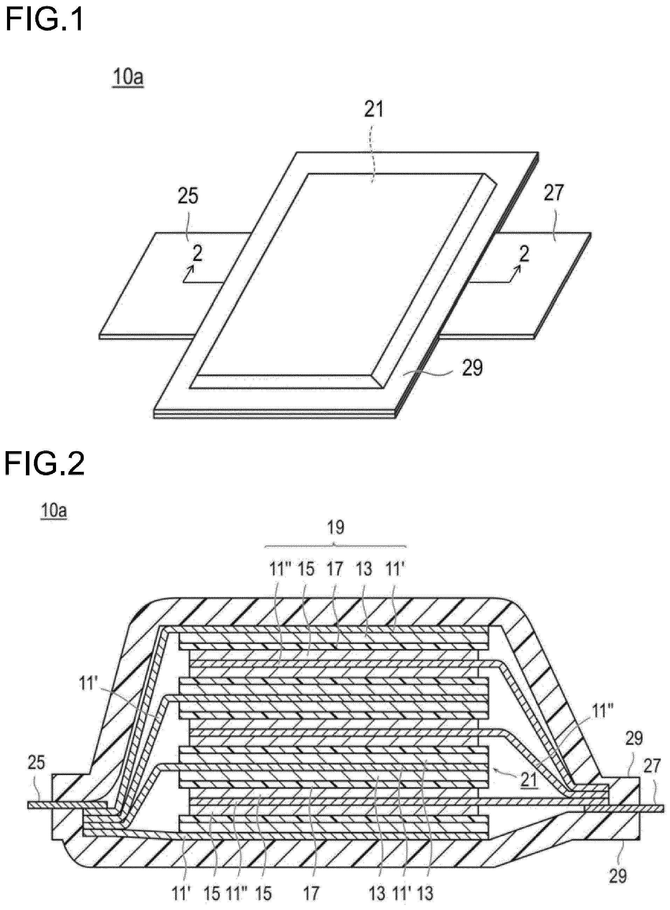

Fig. 1 is a perspective view illustrating an appearance of a flat laminate type all solid lithium secondary battery as an embodiment according to the present invention. Fig. 2 is a cross-sectional view taken along line 2-2 illustrated in Fig. 1. The battery is formed into the laminate type, thereby allowing the battery to be compact and have a high capacity. In the present specification, the embodiment will be described by taking, as an example, a case where a secondary battery is a flat laminate type (non-bipolar type) all solid lithium secondary battery illustrated in Figs. 1 and 2 (hereinafter also simply referred to as "laminate type battery").

As illustrated in Fig. 1, a laminate type battery 10a has a rectangular flat shape, and a negative electrode current collecting plate 25 and a positive electrode current collecting plate 27 for extracting electric power are extended from both sides of the battery. A power-generating element 21 is wrapped in a battery outer casing material (laminate film 29) of the laminate type battery 10a, and the periphery of the battery outer casing material is heat-sealed, and the power-generating element 21 is hermetically sealed in a state where the negative electrode current collecting plate 25 and the positive electrode current collecting plate 27 are extended to the outside.

As illustrated in Fig. 2, the laminate type battery 10a of the present embodiment has a structure in which the flat and substantially rectangular power-generating element 21 in which a charge and discharge reaction actually proceeds is sealed inside the laminate film 29 as the battery outer casing material. Here, the power-generating element 21 has a configuration in which a positive electrode, a solid electrolyte layer 17, and a negative electrode are laminated. The positive electrode has a structure in which a positive electrode active material layer 15 containing a positive electrode active material is disposed on both surfaces of a positive electrode current collector 11". The negative electrode has a structure in which a negative electrode active material layer 13 containing a negative electrode active material is disposed on both surfaces of a negative electrode current collector 11'. Thus, the positive electrode, solid electrolyte layer, and negative electrode that are adjacent constitute one single battery layer 19.

The negative electrode current collector 11' and the positive electrode current collector 11" have a structure in which a negative electrode current collecting plate (tab) 25 and a positive electrode current collecting plate (tab) 27 which are electrically connected to the respective electrodes (the positive electrode and the negative electrode) are respectively attached to the negative electrode current collector 11' and the positive electrode current collector 11" and are led to an outside of the laminate film 29 so as to be sandwiched between ends of the laminate film 29 as the outer casing material. The positive electrode current collecting plate 27 and the negative electrode current collecting plate 25 may be attached to the positive electrode current collector 11" and the negative electrode current collector 11' of the respective electrodes with a positive electrode lead and a negative electrode lead (not illustrated) interposed therebetween, respectively by ultrasonic welding, resistance welding, or the like as necessary.

Hereinafter, main constituent members of the all solid lithium secondary battery according to the present embodiment will be described.

### [Current Collector]

A current collector has a function of mediating transfer of electrons from electrode active material layers. The material constituting the current collector is not particularly limited, and, for example, a metal or a resin having conductivity can be adopted. Note that, as long as a negative electrode active material layer and a positive electrode active material layer to be described later have conductivity by themselves and can have a current collecting function, a current collector as a member different from these electrode active material layers is not necessarily used.

### [Negative Electrode (Negative Electrode Active Material Layer)]

In the laminate type battery according to the embodiment illustrated in Figs. 1 and 2, the negative electrode active material layer 13 contains a negative electrode active material. The type of the negative electrode active material is not particularly limited, and examples thereof include a carbon material, a metal oxide, and a metal active material. In addition, a silicon-based negative electrode active material or a tin-based negative electrode active material may be used as the negative electrode active material. Here, silicon and tin belong to a Group 14 element, and are known to be a negative electrode active material that can greatly improve the capacity of a lithium secondary battery. Since simple substances of silicon and tin can occlude and release a large number of charge carriers (lithium ions and the like) per unit volume (mass), they become a high-capacity negative electrode active material. Furthermore, as the negative electrode active material, a metal containing lithium may be used. Such a negative electrode active material is not particularly limited as long as it is an active material containing lithium, and examples thereof include lithium-containing alloys in addition to metal lithium. Examples of the lithium-containing alloys include an alloy of Li and at least one of In, Al, Si, and Sn. The negative electrode active material preferably contains metal lithium or a lithium-containing alloy, a silicon-based negative electrode active material, or a tin-based negative electrode active material, and particularly preferably contains metal lithium or a lithium-containing alloy. Note that when metal lithium or a lithium-containing alloy is used as the negative electrode active material, the lithium secondary battery as an electric device can be a so-called lithium-deposition type in which metal lithium as the negative electrode active material is deposited on the negative electrode current collector in a charging process. Therefore, in such a form, the thickness of the negative electrode active material layer increases with the progress of the charging process, and the thickness of the negative electrode active material layer decreases with the progress of the discharging process. The negative electrode active material layer may not be present at the time of complete discharge, but, in some cases, a negative electrode active material layer made of some amount of metal lithium may be disposed at the time of complete discharge.

The content of the negative electrode active material in the negative electrode active material layer is not particularly limited, but for example, is preferably within a range of 40 to 99 mass%, and more preferably within a range of 50 to 90 mass%.

Preferably, the negative electrode active material layer further contains a solid electrolyte. The negative electrode active material layer contains the solid electrolyte, as a result of which the ion conductivity of the negative electrode active material layer can be improved. Examples of the solid electrolyte include a sulfide solid electrolyte and an oxide solid electrolyte, and a sulfide solid electrolyte is preferred.

Examples of the sulfide solid electrolyte include LiI-Li₂S-SiS₂, LiI-Li₂S-P₂O₅, LiI-Li₃PO₄-P₂S₅, Li₂S-P₂S₅, LiI-Li₃PS₄, LiI-LiBr-Li₃PS₄, Li₃PS₄, Li₂SP₂S₅-LiI, Li₂S-P₂S₅-Li₂O, Li₂S-P₂S₅-Li₂OLiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZmSn (where m and n are positive numbers, and Z is any of Ge, Zn, and Ga), Li₂S-GeS₂, Li₂S-SiS₂-Li₃PO₄, Li₂S-SiS₂-LixMOy (where x and y are positive numbers, and M is any of P, Si, Ge, B, Al, Ga, and In), and the like. The description of "Li₂S-P₂S₅" means a sulfide solid electrolyte obtained by using a raw material composition containing Li₂S and P₂S₅, and the same applies to other descriptions.

The sulfide solid electrolyte may have, for example, a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS (e.g., Li₇P₃S₁₁). As the sulfide solid electrolyte, for example, LGPS expressed by Li₍₄₋ₓ₎Ge₍₁₋ₓ₎PₓS₄ (x satisfies 0 < x < 1) or the like may be used. Above all, the sulfide solid electrolyte contained in the active material layer is preferably a sulfide solid electrolyte containing a P element, and the sulfide solid electrolyte is more preferably a material containing Li₂S-P₂S₅ as a main component. Furthermore, the sulfide solid electrolyte may contain halogen (F, Cl, Br, I). In a preferred embodiment, the sulfide solid electrolyte is Li₆PS₅X (where X is Cl, Br or I, preferably Cl).

The ion conductivity (e.g., Li ion conductivity) of the sulfide solid electrolyte at a normal temperature (25°C) is, for example, preferably 1×10⁻⁵ S/cm or more, and more preferably 1×10⁻⁴ S/cm or more. A value of the ion conductivity of the solid electrolyte can be measured by an AC impedance method.

Examples of the oxide solid electrolyte include a compound having a NASICON-type structure, and the like. Other examples of the oxide solid electrolyte include LiLaTiO (e.g., Li_{0.34}La_{0.51}TiO₃), LiPON (e.g., Li_{2.9}PO_{3.3}N_{0.46}), LiLaZrO (e.g., Li₇La₃Zr₂O₁₂), and the like.

The content of the solid electrolyte in the negative electrode active material layer is, for example, preferably within a range of 1 to 60 mass%, and more preferably within a range of 10 to 50 mass%.

The negative electrode active material layer may further contain at least one of a conductive aid and a binder in addition to the negative electrode active material and the solid electrolyte described above.

The thickness of the negative electrode active material layer varies depending on the configuration of the intended lithium secondary battery, but is preferably, for example, within a range of 0.1 to 1000 um.

### [Solid Electrolyte Layer]

In the laminate type battery according to the embodiment illustrated in Figs. 1 and 2, the solid electrolyte layer is a layer that is interposed between the positive electrode active material layer and negative electrode active material layer described above and essentially contains a solid electrolyte. The specific form of the solid electrolyte contained in the solid electrolyte layer is not particularly limited, and the examples and preferred forms described in the section of the negative electrode active material layer can be similarly adopted. The solid electrolyte layer may further contain a binder in addition to the specific solid electrolyte described above.

The thickness of the solid electrolyte layer varies depending on the configuration of the intended lithium secondary battery, but is preferably 600 µm or less, more preferably 500 µm or less, and still more preferably 400 µm or less from the viewpoint that the volume energy density of the battery can be improved. Meanwhile, the lower limit value of the thickness of the solid electrolyte layer is not particularly limited, but is preferably 1 µm or more, more preferably 5 µm or more, and still more preferably 10 µm or more.

### [Positive Electrode Active Material Layer]

In the laminate type battery according to the embodiment illustrated in Figs. 1 and 2, the positive electrode active material layer contains a positive electrode material for an electric device according to an embodiment of the present invention. The positive electrode material for an electric device contains, in pores of a porous conductive material, a positive electrode active material containing sulfur and an electronic conductor (a positive electrode active material containing sulfur and an electronic conductor are filled in pores of a porous conductive material). With this configuration, it is possible to improve cycle durability of an electric device that uses a positive electrode active material containing sulfur. Although the mechanism by which such an excellent effect is achieved by the configuration according to the present embodiment is not completely clear, the following mechanism is presumed. In the following description, a preferred embodiment of such a form will be described with reference to the drawings.

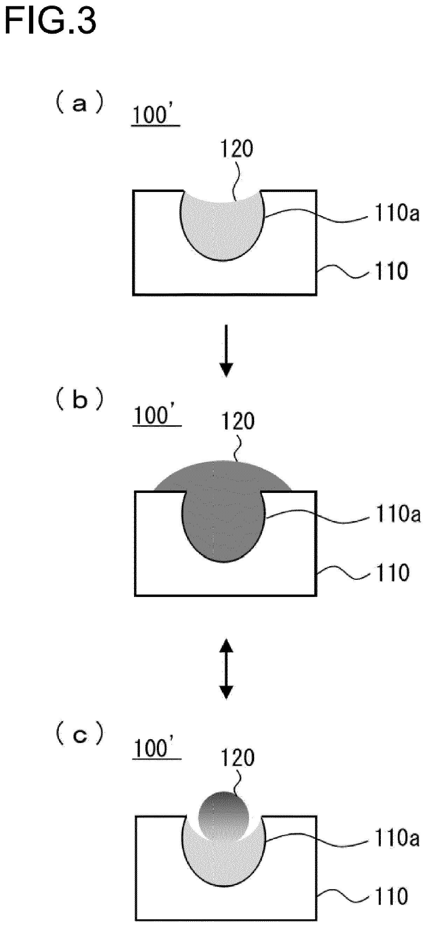

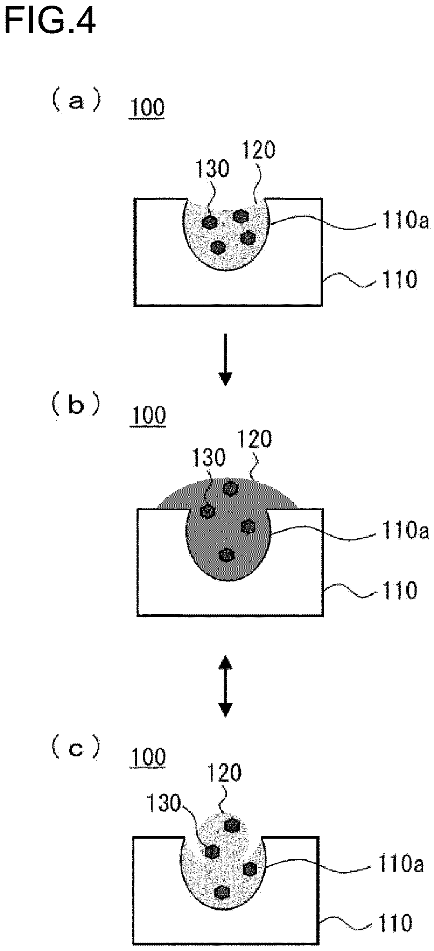

Fig. 3 is a schematic cross-sectional view of a positive electrode material 100' in the prior art. Fig. 4 is a schematic cross-sectional view of a positive electrode material 100 according to an embodiment of the present invention. In Figs. 3 and 4, a porous conductive material (e.g., mesoporous carbon) 110 has a large number of pores 110a. The inside of the pores 110a is filled with a positive electrode active material (e.g., sulfur) 120. Although not illustrated, the positive electrode active material 120 is also disposed on the surface of the porous conductive material 110 other than the pores 110a.

As illustrated in Fig. 3, in the positive electrode material 100' in the prior art, the inside of the pores 110a is filled with the positive electrode active material 120 (state of (a) in Fig. 3). At the time of discharge, the positive electrode active material 120 expands by storing lithium ions. At this time, a part of the positive electrode active material 120 filled in the pores 110a is pushed out of the pores 110a (state of (b) in Fig. 3). At the time of charging, the positive electrode active material 120 contracts by releasing lithium ions. Thus, a part of the positive electrode active material 120 pushed out of the pores 110a is located at a position separated away from the surface of the porous conductive material 110. Since the positive electrode active material 120 has low electron conductivity, a part of the positive electrode active material 120 separated away from the surface of the porous conductive material 110 cannot sufficiently transfer electrons (state of (c) in Fig. 3). As described above, by repeating the charge-discharge cycle, the ratio of the positive electrode active material 120 that does not contribute to the charge-discharge reaction increases, and the cycle durability decreases in an electric device to which the positive electrode material 100' is applied.

On the other hand, as illustrated in Fig. 4, in the positive electrode material 100 according to an embodiment of the present invention, the inside of the pores 110a is filled with an electronic conductor 130 (e.g., carbon fiber) together with the positive electrode active material 120 (state of (a) in Fig. 4). At the time of discharge, the positive electrode active material 120 expands by storing lithium ions. At this time, a part of the positive electrode active material 120 and a part of the electronic conductor 130 that are filled in the pores 110a are both pushed out of the pores 110a (state of (b) in Fig. 4). At the time of charging, the positive electrode active material 120 contracts by releasing lithium ions. At this time, in the embodiment illustrated in Fig. 4, even if a part of the positive electrode active material 120 pushed out of the pores 110a is separated away from the surface of the porous conductive material 110, a conductive path is formed by the presence of the electronic conductor 130, and electrons can be transferred to and from the separated positive electrode active material 120 (state of (c) in Fig. 4). As a result, even after the charge-discharge cycle is repeated, the ratio of the positive electrode active material 120 that does not contribute to the charge-discharge reaction is suppressed to be low, and the cycle durability is improved in an electric device to which the positive electrode material 100 is applied.

### (Porous conductive material)

The porous conductive material is made of a material having conductivity and has pores (voids) therein. By filling the inside of the pores with a positive electrode active material containing sulfur to be described later, many contacts are formed between the pore walls and the positive electrode active material, and electrons are transferred through the contacts. As a result, it is possible to increase the utilization efficiency of the positive electrode active material containing sulfur having low electron conductivity, and to increase the charge-discharge capacity.

The type of the porous conductive material is not particularly limited, and a carbon material, a metal material, a conductive polymer material, and the like can be appropriately adopted, among which a carbon material is preferred. Examples of the carbon material include carbon particles (carbon carriers) made of activated carbon, carbon black such as Ketjen Black (registered trademark) (highly conductive carbon black), (oil) furnace black, channel black, acetylene black, thermal black, lamp black, and the like, mesoporous carbon, coke, natural graphite, artificial graphite, and the like. Among them, at least one selected from a group consisting of activated carbon, carbon black, and mesoporous carbon is preferred, and at least one selected from a group consisting of activated carbon and mesoporous carbon is more preferred. These carbon materials have a sufficient pore size to be easily filled with the positive electrode active material containing sulfur and the electronic conductor. The carbon materials preferably contain carbon as a main component. Here, the phrase "the main component is carbon" means that carbon atoms are contained as a main component, and is a concept including both of being composed solely of carbon atoms and being composed substantially of carbon atoms. The phrase "composed substantially of carbon atoms" means that impurities of about 2 to 3 mass% or less can be allowed to be mixed.

The electron conductivity of the porous conductive material is preferably 1×10⁻⁵ S/m or more, and more preferably 1×10⁻⁴ S/m or more. The upper limit value of the electron conductivity is not particularly limited, but is usually less than 1 S/m. When the electron conductivity is within the above range, the utilization efficiency of the positive electrode active material containing sulfur can be sufficiently improved. The electron conductivity in the present specification is the reciprocal of the electric resistivity. The electrical resistivity can be measured by a DC 4-terminal method for a sheet (thickness: 100 um) obtained by mixing 10 mass% of polytetrafluoroethylene (PTFE, Teflon (registered trademark) 6J manufactured by Du Pont-Mitsui Fluorochemicals Co. Ltd.) with a sample.

The BET specific surface area of the porous conductive material (preferably, a carbon material) is preferably 200 m²/g or more, more preferably 500 m²/g or more, still more preferably 800 m²/g or more, particularly preferably 1200 m²/g or more, and most preferably 1500 m²/g or more. In addition, the pore volume of the porous conductive material is preferably 1.0 mL/g or more, more preferably 1.3 mL/g or more, and still more preferably 1.5 mL/g or more. When the BET specific surface area and the pore volume of the porous conductive material are within the above ranges, a sufficient amount of pores can be retained, and thus sufficient amounts of the positive electrode active material and electronic conductor can be retained. Note that the BET specific surface area and the pore volume of the porous conductive material can be measured by nitrogen adsorption/desorption measurement. This nitrogen adsorption/desorption measurement is performed using BELSORP mini manufactured by MicrotracBEL Corp., and is performed by a multipoint method at a temperature of -196°C. The BET specific surface area is determined from adsorption isotherms in the range of relative pressure of 0.01 < P/P₀ < 0.05. In addition, the pore volume is determined from the volume of the adsorption N₂ at a relative pressure of 0.96.

The pore size (average pore size) of the porous conductive material is not particularly limited, but the lower limit is preferably 0.5 nm or more, more preferably 1 nm or more, still more preferably 2 nm or more, particularly preferably 5 nm or more, and most preferably 10 nm or more. The upper limit is preferably 200 nm or less, more preferably 150 nm or less, still more preferably 100 nm or less, particularly preferably 50 nm or less, and most preferably 30 nm or more. When the pore size is within the above range, electrons can be sufficiently supplied to the active material present at a position separated away from the pore wall among the positive electrode active material containing sulfur disposed inside the pores. Note that the pore size of the porous conductive material can be calculated by nitrogen adsorption/desorption measurement by the same method as described above.

The average particle size (primary particle size) when the porous conductive material is particulate is not particularly limited, but is preferably 2 to 50 um, more preferably 2 to 20 um, and still more preferably 5 to 10 um. Note that, in the present specification, the "particle size" means the maximum distance L among the distances between any two points on the contour line of the particle. As the value of the "average particle size", a value calculated as an average value of particle sizes of particles observed in several to several tens of fields of view (e.g., the average value of the particle sizes of 100 particles) using an observation means such as a scanning electron microscope (SEM) or a transmission electron microscope (TEM) is adopted.

### (Positive Electrode Active Material)

The positive electrode material according to the present embodiment essentially contains a positive electrode active material containing sulfur as the positive electrode active material. The type of the positive electrode active material containing sulfur is not particularly limited, and examples thereof include particles or a thin film of an organic sulfur compound or an inorganic sulfur compound in addition to sulfur simple substance (S) and lithium sulfide (Li₂S). Any material may be used as long as the material can release lithium ions during charging and occlude lithium ions during discharging by utilizing the oxidation-reduction reaction of sulfur. In particular, the inorganic sulfur compound is preferred because it is excellent in stability, and specific examples thereof include sulfur simple substance (S), TiS₂, TiS₃, TiS₄, NiS, NiS₂, CuS, FeS₂, Li₂S, MoS₂, MoS₃, MnS, MnS₂, CoS, CoS₂, and the like. Among the compounds, S, Li₂S, S-carbon composite, TiS₂, TiS₃, TiS₄, FeS₂ and MoS₂ are preferred, sulfur simple substance (S) and lithium sulfide (Li₂S), TiS₂, and FeS₂ are more preferred, and sulfur simple substance (S) and lithium sulfide (Li₂S) are particularly preferred from the viewpoint of high capacity.

The positive electrode material according to the present embodiment may further contain a sulfur-free positive electrode active material in addition to the positive electrode active material containing sulfur. However, a ratio of a content of the positive electrode active material containing sulfur to a total amount of 100 mass% of the positive electrode active material is preferably 50 mass% or more, more preferably 70 mass% or more, still more preferably 80 mass% or more, yet still more preferably 90 mass% or more, particularly preferably 95 mass% or more, and most preferably 100 mass .

### (Electronic conductor)

The positive electrode material according to the present embodiment essentially contains an electronic conductor. The electronic conductor is filled in the pores of the porous conductive material together with the positive electrode active material containing sulfur, whereby a conductive path is formed on the surface of the positive electrode active material. Thus, electrons can be transferred to and from the positive electrode active material separated away from the porous conductive material by charging and discharging. As a result, even after the charge-discharge cycle is repeated, the ratio of the positive electrode active material that does not contribute to the charge-discharge reaction is suppressed to be low, and the cycle durability is improved in an electric device to which the positive electrode material is applied.

The type of the electronic conductor is not particularly limited as long as it has electron conductivity higher than that of the positive electrode active material containing sulfur, but is preferably at least one selected from conductive carbon, metal, metal oxide, metal sulfide, and conductive polymer. Examples of the conductive carbon include carbon fiber, graphene, carbon nanotube (single-walled carbon nanotube and multi-walled carbon nanotube), carbon nanohorn, carbon nanoballoon, fullerene, and the like. Examples of the metal include nickel, titanium, aluminum, copper, platinum, iron, chromium, tin, zinc, indium, antimony, and vanadium, or an alloy containing at least one of these metals, and the like. Here, examples of the alloy include stainless steel (SUS), Inconel (registered trademark), Hastelloy (registered trademark), other Fe-Cr-based alloys, and Ni-Cr alloys. Examples of the metal oxide include titanium oxide (TiO₂), zinc oxide (ZnO), indium oxide (In₂O₃), tin oxide (SnO₂), and indium tin oxide (Indium Tin Oxide; ITO), vanadium oxide (V₂O₅), triiron tetraoxide (Fe₃O₄), zirconium oxide (ZrO₂), tungsten oxide (IV) (WO₂), and the like. Examples of the metal sulfide include iron sulfide (FeS), copper sulfide (I) (Cu₂S), cadmium sulfide (CdS), indium sulfide (III) (In₂S₃), and the like. Examples of the conductive polymer include carbon polysulfide, polyaniline, polypyrrole, polythiophene, polyacetylene, polyparaphenylene, polyphenylenevinylene, polyacrylonitrile, polyoxadia, and the like. Among these materials, because of high electron conductivity, conductive carbon is preferred, carbon fiber, graphene, and carbon nanotube (single-walled carbon nanotube and multi-walled carbon nanotube) are more preferred, and carbon fiber is still more preferred.

In the present embodiment, the electron conductivity of the electronic conductor is preferably higher than the electron conductivity of the porous conductive material. With such a configuration, the utilization efficiency of the positive electrode active material containing sulfur is further increased even after the charge-discharge cycle, and the cycle durability of an electric device can be further improved.

The electron conductivity of the electronic conductor is preferably 1 S/m or more, more preferably 1×10² S/m or more, still more preferably 1×10⁴ S/m or more, and still more preferably 1×10⁵ S/m or more. The upper limit value of the electron conductivity is not particularly limited, but is usually 1×10⁷ S/m or less. When the electron conductivity is within the above range, the utilization efficiency of the positive electrode active material containing sulfur can be further improved.

The shape of the electronic conductor is not particularly limited, and a particulate shape, a fibrous shape, a sheet shape, or the like can be appropriately adopted. In addition, the size of the electronic conductor is not particularly limited as long as at least a part of the electronic conductor can be filled in the pores of the porous conductive material.

In the positive electrode material according to the present embodiment, the amount of the electronic conductor is preferably 0.1 to 25 mass%, more preferably 1 to 20 mass%, still more preferably 1 to 10 mass%, and particularly preferably 1 to 5 mass% with respect to the amount of 100 mass% of the positive electrode active material containing sulfur. When the ratio is 0.1 mass% or more, the utilization efficiency of the positive electrode active material containing sulfur can be further improved. When the ratio is 25 mass% or less, the amount of the positive electrode active material is not too small, and the charge-discharge capacity can be maintained.

### (Electrolyte)

The positive electrode material according to the present embodiment preferably further contains an electrolyte in the pores of the porous conductive material. By containing an electrolyte, charge carriers smoothly move in and out of the surface of the positive electrode active material containing sulfur, and output characteristics can be improved. The specific form of the electrolyte is not particularly limited, and solid electrolytes such as the sulfide solid electrolyte and the oxide solid electrolyte described in the sections of the liquid electrolyte and the negative electrode active material layer can be appropriately adopted.

Among them, the solid electrolyte contained in the positive electrode material according to the present embodiment is preferably a sulfide solid electrolyte. In another preferred embodiment, the sulfide solid electrolyte contains alkali metal atoms. Here, examples of the alkali metal atoms that can be contained in the sulfide solid electrolyte include lithium atoms, sodium atoms, and potassium atoms, among which lithium atoms are preferred because of their excellent ionic conductivity. In still another preferred embodiment, the solid electrolyte contained in the solid electrolyte layer contains alkali metal atoms (e.g., lithium atoms, sodium atoms, or potassium atoms; preferably lithium atoms) and phosphorus atoms and/or boron atoms. In a preferred embodiment, the sulfide solid electrolyte is Li₆PS₅X (where X is Cl, Br or I, preferably Cl). Since these solid electrolytes have high ionic conductivity, they can particularly effectively contribute to improvement of output characteristics.

An example of a method for producing a positive electrode material having the above configuration according to the present embodiment will be described. As described above, it is presumed that the positive electrode material according to the present embodiment contributes to excellent cycle durability because a conductive path is favorably formed by filling the pores of the porous conductive material with the positive electrode active material containing sulfur and the electronic conductor. In order to achieve such a configuration, first, the porous conductive material, the positive electrode active material containing sulfur, and the electronic conductor are sufficiently mixed by a mixing treatment using a mixing means such as a mortar or the like or a milling treatment using a grinding means such as a planetary ball mill or the like. Thereafter, the obtained mixture is heat-treated at a high temperature. The positive electrode active material containing sulfur is melted by the heat treatment, and the electronic conductor together with the positive electrode active material are filled in the pores of the porous conductive material. At this time, the temperature of the heat treatment is not particularly limited, but is preferably 170°C or higher, more preferably 175°C or higher, still more preferably 180°C or higher, and particularly preferably 185°C or higher. On the other hand, the upper limit value of the heat treatment temperature is also not particularly limited, but is, for example, 250°C or lower, and preferably 200°C or lower. In addition, the heat treatment time is not particularly limited, and may be about 1 to 5 hours.

As a production method when the positive electrode material further contains a solid electrolyte (e.g., a sulfide solid electrolyte) in the pores of the porous conductive material, a method may be adopted in which a mixture of the porous conductive material and the solid electrolyte is obtained by a mixing treatment or a milling treatment, then the heat treatment described above is performed in a state where the positive electrode active material containing sulfur and the electronic conductor are additionally added to the mixture. With such a method, the positive electrode active material, the electronic conductor, and the solid electrolyte enter the inside of the pores of the porous conductive material having the pores by the heat treatment, and a positive electrode material in a preferred form in which a large number of three-phase interfaces are formed can be obtained. In addition, as another production method, a solution of the solid electrolyte dissolved in an appropriate solvent capable of dissolving the solid electrolyte is prepared first, then the porous conductive material is impregnated into the solution, and the solution is heated to a temperature of about 100 to 180°C for about 1 to 5 hours as needed, whereby a solid electrolyte impregnated porous conductive material (composite) can be obtained. In this composite, the solid electrolyte usually enters and adheres to the inside of the pores of the porous conductive material. Next, by subjecting the composite to the heat treatment described above in a state where the positive electrode active material containing sulfur and the electronic conductor are additionally added, the positive electrode active material is melted to allow the positive electrode active material and the electronic conductor to enter the inside of the pores of the porous conductive material, and a positive electrode material in a preferred form in which a large number of three-phase interfaces are formed can be obtained. With the production method adopting a wet process, a positive electrode material particularly excellent in initial capacity characteristics and charge-discharge rate characteristics can be obtained.

The content of the positive electrode active material in the positive electrode active material layer is not particularly limited, but, for example, is preferably within a range of 35 to 99 mass%, more preferably within a range of 40 to 90 mass%, still more preferably within a range of 40 to 80 mass%, particularly preferably within a range of 40 to 75 mass%, and most preferably within a range of 40 to 70 mass%. The value of the content is calculated based on the mass of only the positive electrode active material excluding the porous conductive material and the solid electrolyte.

In addition, the positive electrode active material layer may further contain a conductive aid (one in which the positive electrode active material and the solid electrolyte are not retained inside the pores) and/or a binder. Similarly, the positive electrode active material layer preferably further contains a solid electrolyte separately from the positive electrode material described above.

The thickness of the positive electrode active material layer varies depending on the configuration of the intended lithium secondary battery, but is preferably, for example, within a range of 0.1 to 1000 um.

### [Positive Electrode Current Collecting Plate and Negative Electrode Current Collecting Plate]

A material constituting the current collecting plates (25 and 27) is not particularly limited, and a known highly conductive material conventionally used as a current collecting plate for a secondary battery can be used. As the material constituting the current collecting plates, for example, a metal material such as aluminum, copper, titanium, nickel, stainless steel (SUS), or an alloy thereof is preferred. From the viewpoint of weight reduction, corrosion resistance, and high conductivity, aluminum and copper are more preferred, and aluminum is particularly preferred. An identical material or different materials may be used for the positive electrode current collecting plate 27 and the negative electrode current collecting plate 25.

### [Positive Electrode Lead and Negative Electrode Lead]

Although not illustrated, the current collector and the current collecting plate may be electrically connected with a positive electrode lead or a negative electrode lead interposed therebetween. As the material constituting the positive electrode lead and the negative electrode lead, a material used in a known secondary battery can be similarly adopted. The portion taken out from an outer casing is preferably covered with a heat resistant and insulating heat shrinkable tube or the like so as not to affect a product (e.g., an automotive component, particularly an electronic device, or the like) due to electric leakage caused by contact with peripheral devices, wiring lines, or the like.

### [Battery Outer Casing Material]

As the battery outer casing material, a known metal can case can be used, and a bag-shaped case using the aluminum-containing laminate film 29, which can cover a power-generating element as illustrated in Figs. 1 and 2, can be used. As the laminate film, for example, a laminate film or the like having a three-layer structure formed by laminating PP, aluminum, and nylon can be used, but the laminate film is not limited thereto. The laminate film is desirable from the viewpoint of high output and excellent cooling performance, and suitable application for batteries for large devices for EV and HEV. Further, from the perspective of easy adjustment of a group pressure applied to the power-generating element from an outside, the outer casing body is more preferably a laminate film containing aluminum.

The laminate type battery according to the present embodiment has a configuration in which a plurality of single battery layers is connected in parallel, and thus has a high capacity and excellent cycle durability. Therefore, the laminate type battery according to the present embodiment is suitably used as a power source for driving EV and HEV.

Although the all solid lithium secondary battery, which is an embodiment of an electric device, has been described above, the present invention is not limited to only the configurations described in the above-described embodiment, and can be appropriately changed based on the description of the claims.

For example, the type of electric device to which the positive electrode material according to the present embodiment is applied is a bipolar type (bipolar type) battery including a bipolar electrode having a positive electrode active material layer electrically coupled to one surface of a current collector and a negative electrode active material layer electrically coupled to an opposite surface of the current collector.

The electric device according to the present embodiment may not be an all-solid-state lithium secondary battery. Hence, the solid electrolyte layer may further contain a conventionally known liquid electrolyte (electrolyte solution). The amount of the liquid electrolyte (electrolyte solution) that can be contained in the solid electrolyte layer is not particularly limited, but is preferably such an amount that the shape of the solid electrolyte layer formed by the solid electrolyte is maintained and liquid leakage of the liquid electrolyte (electrolyte solution) does not occur.

The lithium secondary battery to which the positive electrode material according to the present embodiment is applied is not limited to a laminate type flat shape. A wound type lithium secondary battery is not particularly limited, and may have a cylindrical shape, or may have a rectangular flat shape obtained by deforming such a cylindrical shape, for example.

### [Assembled Battery]

An assembled battery is one configured by connecting a plurality of batteries. In detail, the assembled battery is one configured by serializing, parallelizing, or both serializing and parallelizing at least two or more batteries. It is possible to freely adjust the capacity and the voltage by serializing and parallelizing the batteries.

A plurality of batteries may be connected in series or in parallel to form an attachable and detachable compact assembled battery. Further, a plurality of such attachable and detachable compact assembled batteries may be connected in series or in parallel to form an assembled battery (such as a battery module or a battery pack) having a large capacity and a large output suitable for a power source for driving a vehicle and an auxiliary power source which require a high volume energy density and a high volume output density. How many batteries are connected to produce an assembled battery and how many stages of compact assembled batteries are laminated to produce a large-capacity assembled battery may be determined according to a battery capacity or output of a vehicle (electric vehicle) on which the assembled battery is to be mounted.

### [Vehicle]

A battery or an assembled battery formed by combining a plurality of batteries can be mounted on a vehicle. In the present invention, a long-life battery having excellent long-term reliability can be configured, and thus mounting such a battery can provide a plug-in hybrid electric vehicle having a long EV traveling distance or an electric vehicle having a long one charge traveling distance. This is because a long-life and highly reliable automobile is provided when a battery or an assembled battery formed by combining a plurality of batteries is used, for example, for a hybrid vehicle, a fuel cell vehicle, or an electric vehicle (each encompasses a four-wheeled vehicle (a passenger car, a commercial car such as a truck or a bus, a light vehicle, and the like), a two-wheeled vehicle (motorcycle), and a three-wheeled vehicle) in the case of an automobile. However, the application is not limited to automobiles, and for example, the present invention can also be applied to various power sources of other vehicles, for example, movable bodies such as trains and can also be used as a mounting power source of an uninterruptible power system or the like.

### Examples

Hereinbelow, the present invention will be described in more detail with reference to Examples. However, the technical scope of the present invention is not limited to the following Examples.

### <Production Example of Test Cell>

### [Example 1]

### (Preparation of Positive Electrode Material)

In a glove box with an argon atmosphere at a dew point of -68°C or lower, to 9.8 parts by mass of activated carbon A (MSC 30, manufactured by KANSAI COKE & CHEMICALS CO., LTD., BET specific surface area of more than 3000 m²/g, average particle size of 9 um, pore size of 2 nm, electron conductivity of 0.0002 S/m) as a porous conductive material, 48.8 parts by mass of sulfur (manufactured by Sigma-Aldrich Co. LLC) and 2.4 parts by mass of carbon fiber (fiber diameter of 0.2 um, electron conductivity of 100 S/m) as an electronic conductor were added, mixed sufficiently in an agate mortar, and then the mixed powder was placed in a sealed pressure-resistant autoclave vessel and heated at 170°C for 3 hours. Thus, sulfur was melted to impregnate the porous conductive material with sulfur in which the electronic conductor was dispersed, thereby obtaining a powder of the positive electrode material.

### (Preparation of Positive Electrode Mixture)

In a glove box with an argon atmosphere at a dew point of -68°C or lower, 40 g of zirconia balls having a diameter of 5 mm, 0.130 g of the positive electrode material, and 0.070 g of a solid electrolyte (Li₆PS₅Cl manufactured by Ampcera Inc.) were placed in a zirconia container with a capacity of 45 ml, and treated with a planetary ball mill (Premium line P-7 manufactured by Fritsch GmbH) at 370 rpm for 6 hours to obtain a powder of the positive electrode mixture. The composition of the positive electrode mixture was sulfur : solid electrolyte : carbon (porous conductive material) = 50:40:10 (mass ratio).

### (Preparation of Test Cell (All Solid Lithium Secondary Battery))

The battery was prepared in a glove box with an argon atmosphere at a dew point of -68°C or lower. A cylindrical convex punch (10 mm diameter) made of SUS was inserted into one side of a cylindrical tube jig (tube inner diameter of 10 mm, outer diameter of 23 mm, height of 20 mm) made of MACOL, and 80 mg of a sulfide solid electrolyte (Li₆PS₅Cl manufactured by Ampcera Inc.) was placed in from the upper side of the cylindrical tube jig. Then, another cylindrical convex punch made of SUS was inserted to sandwich the solid electrolyte and pressed at a pressure of 75 MPa for 3 minutes using a hydraulic press to form a solid electrolyte layer having a diameter of 10 mm and a thickness of about 0.6 mm in the cylindrical tube jig. Next, the cylindrical convex punch inserted from the upper side was once removed, 7.5 mg of the positive electrode mixture prepared above was added to one side surface of the solid electrolyte layer in the cylindrical tube, and the cylindrical convex punch (also serving as a positive electrode current collector) was inserted again from the upper side and pressed at a pressure of 300 MPa for 3 minutes to form a positive electrode active material layer having a diameter of 10 mm and a thickness of about 0.06 mm on one side surface of the solid electrolyte layer. Next, the lower cylindrical convex punch (also serving as a negative electrode current collector) was removed, and a lithium foil (manufactured by The Nilaco Corporation, thickness of 0.20 mm) punched to a diameter of 8 mm and an indium foil (manufactured by The Nilaco Corporation, thickness of 0.30 mm) punched to a diameter of 9 mm were laminated as a negative electrode and put in from the lower side of the cylindrical tube jig so that the indium foil was located on the solid electrolyte layer side. Then, the cylindrical convex punch was inserted again and pressed at a pressure of 75 MPa for 3 minutes to form a lithium-indium negative electrode. In the above-described manner, the test cell (all solid lithium secondary battery) in which the negative electrode current collector (punch), the lithium-indium negative electrode, the solid electrolyte layer, the positive electrode active material layer, and the positive electrode current collector (punch) were laminated in this order was prepared.

### [Example 2]

The test cell was prepared by the same method as in Example 1 described above, except that activated carbon B (BET specific surface area of more than 1000 m²/g, average particle size of 6 um, pore size of 0.8 nm, electron conductivity of 0.0002 S/m) was used instead of activated carbon A as the porous conductive material.

### [Example 3]

The test cell was prepared by the same method as in Example 1 described above, except that carbon black (Ketjen Black (registered trademark) manufactured by Lion Corporation, average particle size of 12 um, pore size of 2.4 nm, electron conductivity of 0.01 S/m) was used instead of activated carbon A as the porous conductive material.

### [Example 4]

The test cell was prepared by the same method as in Example 1 described above, except that mesoporous carbon A (P(3)010 manufactured by Toyo Tanso Co., Ltd., average particle size of 5 um, pore size of 10 nm, electron conductivity of 0.125 S/m) was used instead of activated carbon A as the porous conductive material.

### [Example 5]

The test cell was prepared by the same method as in Example 1 described above, except that mesoporous carbon B (MJ(4)150 manufactured by Toyo Tanso Co., Ltd., average particle size of 8 um, pore size of 150 nm, electron conductivity of 0.07692 S/m) was used instead of activated carbon A as the porous conductive material.

### [Example 6]

The test cell was prepared by the same method as in Example 4 described above, except that graphene (thickness of less than 0.01 um, electron conductivity of 7.5×10⁵ S/m) was used instead of carbon fiber as the electronic conductor.

### [Example 7]

The test cell was prepared by the same method as in Example 4 described above, except that carbon nanotube (fiber diameter of less than 0.1 um, electron conductivity of 5×10⁵ S/m) was used instead of carbon fiber as the electronic conductor.

### [Example 8]

The test cell was prepared by the same method as in Example 4 described above, except that ZnO (particle size of 0.2 um, electron conductivity of 0.66667 S/m) was used as the electronic conductor instead of carbon fiber, and that the amounts of the porous conductive material, sulfur, and electronic conductor were 9.5 parts by mass of porous conductive material, 47.6 parts by mass of sulfur, and 4.8 parts by mass of electronic conductor.

### [Example 9]

The test cell was prepared by the same method as in Example 8 described above, except that SnO₂ (particle size of 0.2 um, electron conductivity of 100 S/m) was used instead of ZnO as the electronic conductor.

### [Example 10]

The test cell was prepared by the same method as in Example 8 described above, except that V₂O₅ (particle size of 0.2 um, electron conductivity of 1 S/m) was used instead of ZnO as the electronic conductor.

### [Example 11]

The test cell was prepared by the same method as in Example 8 described above, except that FeS (particle size of 0.2 um, electron conductivity of 0.2 S/m) was used instead of ZnO as the electronic conductor.

### [Example 12]

The test cell was prepared by the same method as in Example 8 described above, except that carbon polysulfide (particle size of 0.2 um, electron conductivity of 1.5×10⁻⁶ S/m) was used instead of ZnO as the electronic conductor.

### [Example 13]

The test cell was prepared by the same method as in Example 4 described above, except that the amounts of the porous conductive material, sulfur, and electronic conductor were 9.5 parts by mass of porous conductive material, 47.6 parts by mass of sulfur, and 4.8 parts by mass of electronic conductor.

### [Example 14]

The test cell was prepared by the same method as in Example 4 described above, except that the amounts of the porous conductive material, sulfur, and electronic conductor were 9.1 parts by mass of porous conductive material, 45.5 parts by mass of sulfur, and 9.1 parts by mass of electronic conductor.

### [Example 15]

The test cell was prepared by the same method as in Example 4 described above, except that the amounts of the porous conductive material, sulfur, and electronic conductor were 8.7 parts by mass of porous conductive material, 43.5 parts by mass of sulfur, and 13.0 parts by mass of electronic conductor.

### [Example 16]

The test cell was prepared by the same method as in Example 4 described above, except that (Preparation of Positive Electrode Material) was performed by the following method.

### (Preparation of Positive Electrode Material)

In a glove box with an argon atmosphere at a dew point of -68°C or lower, 0.500 g of a sulfide solid electrolyte (Li₆PS₅Cl manufactured by Ampcera Inc.) was added to 100 mL of super dehydrated ethanol (manufactured by FUJIFILM Wako Pure Chemical Corporation), and sufficiently stirred to dissolve the solid electrolyte in ethanol. To the obtained solid electrolyte ethanol solution, 1.00 g of mesoporous carbon A (P(3)010 manufactured by Toyo Tanso Co., Ltd., average particle size of 5 um, pore size of 10 nm, electron conductivity of 0.125 S/m) as a porous conductive material was added, and well stirred to sufficiently disperse the porous conductive material in the solution. The container containing the dispersion liquid was connected to a vacuum apparatus, and the inside of the container was depressurized to less than 1 Pa by an oil rotary pump while stirring the dispersion in the container with a magnetic stirrer. Since ethanol as a solvent was volatilized under reduced pressure, the ethanol was removed with the lapse of time, and the porous conductive material impregnated with the solid electrolyte remained in the container. In this manner, a solid electrolyte impregnated porous conductive material was prepared by removing the ethanol under reduced pressure, then heating the remaining to 180°C under reduced pressure, and performing heat treatment for 3 hours.

In a glove box with an argon atmosphere at a dew point of -68°C or lower, to 21.3 parts by mass of the solid electrolyte impregnated porous conductive material, 42.6 parts by mass of sulfur (manufactured by Sigma-Aldrich Co. LLC) and 2.1 parts by mass of carbon fiber (fiber diameter of 0.2 um, electron conductivity of 100 S/m) as an electronic conductor were added and sufficiently mixed in an agate mortar, and then the mixed powder was placed in a sealed pressure-resistant autoclave vessel and heated at 170°C for 3 hours. Thus, sulfur was melted to impregnate the porous conductive material with sulfur in which the electronic conductor was dispersed, thereby obtaining a powder of the positive electrode material.

### [Example 17]

The test cell was prepared by the same method as in Example 4 described above, except that the amounts of the porous conductive material, sulfur, and electronic conductor were 10.0 parts by mass of porous conductive material, 49.8 parts by mass of sulfur, and 0.5 parts by mass of electronic conductor.

### [Comparative Example 1]

The test cell was prepared by the same method as in Example 1 described above, except that carbon fiber as an electronic conductor was not used, and that the amounts of the porous conductive material (activated carbon A) and sulfur were 10 parts by mass of porous conductive material and 50 parts by mass of sulfur.

### [Comparative Example 2]

The test cell was prepared by the same method as in Example 4 described above, except that carbon fiber as an electronic conductor was not used, and that the amounts of the porous conductive material (mesoporous carbon A) and sulfur were 10 parts by mass of porous conductive material and 50 parts by mass of sulfur.

### <Evaluation Example of Test Cell>

The cycle durability of the test cell prepared in each of the above Examples and Comparative Examples was evaluated by the following method. Note that the evaluation was conducted in a constant temperature thermostat bath set at 25°C using a charge and discharge test device (HJ-SD8 manufactured by Hokuto Denko KK).

The test cell was placed in the thermostat bath, and after the cell temperature became constant, constant current discharge was performed to a cell voltage of 0.5 V at a current density of 0.2 mA/cm². Subsequently, 2.5 V constant-current constant-voltage charging was performed at the same current density with a cutoff current set to 0.01 mA/cm². For this charge-discharge cycle, the capacity retention rate was determined from the ratio of the 100th discharge capacity to the second discharge capacity. The results are shown in Table 1 below.

**[Table 1]**

| | Porous conductive material | | | Sulfur | Electron conductor | | | | | Sulfide solid electrolyte | Capacity retention rate |
|---|---|---|---|---|---|---|---|---|---|---|---|
| | Type | Pore size [nm] | Amount [parts by mass] | Amount [parts by mass] | Type | Diameter [µm] | Ratio of diameter to pore size | Amount [parts by mass] | Ratio to amount of sulfur [mass%] | Amount [parts by mass] | |
| Example 1 | Activated carbon A | 2 | 9.8 | 48.8 | Carbon fiber | 0.2 | 1000 | 2.4 | 5 | 0 | 0.88 |
| Example 2 | Activated carbon B | 0.8 | 9.8 | 48.8 | Carbon fiber | 0.2 | 250.0 | 2.4 | 5 | 0 | 0.76 |
| Example 3 | Carbon black | 2.4 | 9.8 | 48.8 | Carbon fiber | 0.2 | 83.3 | 2.4 | 5 | 0 | 0.91 |
| Example 4 | Mesoporous carbon A | 10 | 9.8 | 48.8 | Carbon fiber | 0.2 | 20.0 | 2.4 | 5 | 0 | 0.95 |
| Example 5 | Mesoporous carbon B | 150 | 9.8 | 48.8 | Carbon fiber | 0.2 | 1.3 | 2.4 | 5 | 0 | 0.91 |
| Example 6 | Mesoporous carbon A | 10 | 9.8 | 48.8 | Graphene | < 0.01 | < 10 | 2.4 | 5 | 0 | 0.74 |
| Example 7 | Mesoporous carbon A | 10 | 9.8 | 48.8 | Carbon nanotube | < 0.1 | < 100 | 2.4 | 5 | 0 | 0.85 |
| Example 8 | Mesoporous carbon A | 10 | 9.5 | 47.6 | ZnO | 0.2 | 20.0 | 4.8 | 10 | 0 | 0.66 |
| Example 9 | Mesoporous carbon A | 10 | 9.5 | 47.6 | SnO₂ | 0.2 | 20.0 | 4.8 | 10 | 0 | 0.75 |
| Example 10 | Mesoporous carbon A | 10 | 9.5 | 47.6 | V₂O₅ | 0.2 | 20.0 | 4.8 | 10 | 0 | 0.75 |
| Example 11 | Mesoporous carbon A | 10 | 9.5 | 47.6 | FeS | 0.2 | 20.0 | 4.8 | 10 | 0 | 0.79 |
| Example 12 | Mesoporous carbon A | 10 | 9.5 | 47.6 | Carbon polysulfide | 0.2 | 20.0 | 4.8 | 10 | 0 | 0.80 |
| Example 13 | Mesoporous carbon A | 10 | 9.5 | 47.6 | Carbon fiber | 0.2 | 20.0 | 4.8 | 10 | 0 | 0.95 |
| Example 14 | Mesoporous carbon A | 10 | 9.1 | 45.5 | Carbon fiber | 0.2 | 20.0 | 9.1 | 20 | 0 | 0.96 |
| Example 15 | Mesoporous carbon A | 10 | 8.7 | 43.5 | Carbon fiber | 0.2 | 20.0 | 13.0 | 30 | 0 | 0.94 |
| Example 16 | Mesoporous carbon A | 10 | 8.5 | 42.6 | Carbon fiber | 0.2 | 20.0 | 2.1 | 5 | 12.8 | 0.95 |
| Example 17 | Mesoporous carbon A | 10 | 100 | 49.8 | Carbon fiber | 0.2 | 20.0 | 0.5 | 1 | 0 | 0.79 |
| Comparative example 1 | Activated carbon A | 2 | 10 | 50 | - | - | - | 0 | - | 0 | 0.33 |
| Comparative example 2 | Mesoporous carbon A | 10 | 10 | 50 | - | - | - | 0 | - | 0 | 0.52 |

From the results shown in Table 1, it is found that the present invention can achieve improvement in cycle durability of an electric device that uses the positive electrode active material containing sulfur.

By using conductive carbon as the electronic conductor, a higher capacity retention rate can be obtained. This is considered to be because the conductive carbon has a higher electron conductivity than other materials.

By using a material having a larger pore size (e.g., mesoporous carbon) as the porous conductive material, a higher capacity retention rate can be obtained. This is considered to be because the sulfur and electronic conductor easily enter the pores, and a larger amount of the sulfur and electronic conductor can be disposed in the pores.

Even if the amount of the electronic conductor is relatively small (e.g., 1 mass%) with respect to the amount of sulfur, the capacity retention rate can be sufficiently improved. This is considered to be because the amount of sulfur that can contribute to the charge-discharge reaction is increased by the presence of the electronic conductor dispersed in sulfur even if the amount of the electronic conductor is small. Note that when the amount of the electronic conductor is in the range of 5 to 30 mass%, there is no large difference in the effect of improving the capacity retention rate. This is considered to be because the effect of improving the utilization efficiency of sulfur is saturated by the presence of the electronic conductor when the amount of the electronic conductor is equal to or more than a certain value. If the amount of the electronic conductor is increased, the amount of sulfur is relatively reduced, and the charge-discharge capacity is reduced. Therefore, from the viewpoint of the balance between the cycle durability and the charge-discharge capacity, the amount of the electronic conductor is preferably 10 mass% or less, and more preferably 5 mass% or less.

### Reference Signs List

- 10a: Laminate type battery
- 11': Negative electrode current collector
- 11": Positive electrode current collector
- 13: Negative electrode active material layer
- 15: Positive electrode active material layer
- 17: Solid electrolyte layer
- 19: Single battery layer
- 21: Power-generating element
- 25: Negative electrode current collecting plate
- 27: Positive electrode current collecting plate
- 29: Laminate film
- 100, 100': Positive electrode material
- 110: Porous conductive material (mesoporous carbon)
- 110a: Pore
- 120: Positive electrode active material (sulfur)
- 130: Electronic conductor (carbon fiber)

## Claims

1. A positive electrode material for an electric device, the positive electrode material comprising, in pores of a porous conductive material: a positive electrode active material containing sulfur; and an electronic conductor.

2. The positive electrode material for an electric device according to claim 1, the positive electrode material further comprising an electrolyte in the pores of the porous conductive material.

3. The positive electrode material for an electric device according to claim 2, wherein the electrolyte is a sulfide solid electrolyte.

4. The positive electrode material for an electric device according to any one of claims 1 to 3, wherein an electron conductivity of the electronic conductor is higher than an electron conductivity of the porous conductive material.

5. The positive electrode material for an electric device according to any one of claims 1 to 4, wherein the electronic conductor is at least one selected from a group consisting of conductive carbon, metal, metal oxide, metal sulfide, and conductive polymer.

6. The positive electrode material for an electric device according to any one of claims 1 to 5, wherein the porous conductive material is at least one selected from a group consisting of activated carbon, carbon black, and mesoporous carbon.

7. The positive electrode material for an electric device according to any one of claims 1 to 6, wherein a pore size of the porous conductive material is 5 nm or more.

8. The positive electrode material for an electric device according to any one of claims 1 to 7, wherein an amount of the electronic conductor is 0.1 to 25 mass% with respect to an amount of the positive electrode active material containing sulfur.

9. A positive electrode for an electric device, the positive electrode comprising the positive electrode material for an electric device according to any one of claims 1 to 8.

10. An electric device comprising the positive electrode for an electric device according to claim 9.

11. The electric device according to claim 10, wherein the electric device is an all solid lithium secondary battery.
